(19) Europäisches Patentamt
European Patent Office
Office européen des brevets

(11) **EP 4 538 245 A1**

(12) **EUROPEAN PATENT APPLICATION**
published in accordance with Art. 153(4) EPC

(43) Date of publication:
**16.04.2025 Bulletin 2025/16**

(21) Application number: **23819604.2**

(22) Date of filing: **16.05.2023**

(51) International Patent Classification (IPC):
**C03C 13/04** (2006.01) **C03C 3/06** (2006.01)
**G02B 6/02** (2006.01)

(52) Cooperative Patent Classification (CPC):
**C03C 3/06; C03C 13/04; G02B 6/02**

(86) International application number:
**PCT/JP2023/018319**

(87) International publication number:
**WO 2023/238620 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022 JP 2022094170**

(71) Applicant: **SUMITOMO ELECTRIC INDUSTRIES,
LTD.
Osaka-shi, Osaka 541-0041 (JP)**

(72) Inventors:
• **SATO, Shin
Osaka-shi, Osaka 541-0041 (JP)**
• **HASEGAWA, Takemi
Osaka-shi, Osaka 541-0041 (JP)**
• **ISHIKAWA, Shinji
Osaka-shi, Osaka 541-0041 (JP)**

(74) Representative: **TBK
Bavariaring 4-6
80336 München (DE)**

(54) **GLASS MATERIAL AND OPTICAL FIBER**

(57) This glass material is formed from silica glass and includes a Group 14 element. The glass material includes an element X that encompasses tin and/or lead, as tetravalent ions $X^{4+}$ and divalent ions $X^{2+}$.

**EP 4 538 245 A1**

## Description

TECHNICAL FIELD

The present disclosure relates to a glass material and an optical fiber. This application claims priority based on Japanese Patent Application No. 2022-094170 filed on June 10, 2022, and the entire contents of the Japanese patent application are incorporated herein by reference.

BACKGROUND ART

Germanium can be used as an upper dopant for increasing the refractive index of glass. Non-patent literature 1 discloses an optical fiber in which germanium is added to a core.

CITATION LIST

NON PATENT LITERATURE

Non-patent literature 1: Motohiro Nakahara and two other authors, "Reduction of Loss of Optical Fiber", Oubutsu, Vol. 50, No. 10 (1981), pp. 1006-1020

SUMMARY OF THE INVENTION

A glass material according to an aspect of the present disclosure comprises a silica-based glass and containing a group 14 element. The glass material contains a tetravalent ion $X^{4+}$ of an element X that is at least one of tin and lead and a divalent ion $X^{2+}$ of the element X.
An optical fiber according to an aspect of the present disclosure includes a core comprising a silica-based glass and containing a group 14 element and a cladding comprising a silica-based glass and surrounding the core. The core contains a tetravalent ion $X^{4+}$ of an element X that is at least one of tin and lead and a divalent ion $X^{2+}$ of the element X.

BRIEF DESCRIPTION OF THE DRAWINGS

FIG. 1 is a cross-sectional view showing an optical fiber according to an embodiment.
FIG. 2 is a graph showing the relationship between the concentration ratio and the transmission loss.
FIG. 3 is a graph showing the relationship between the concentration ratio and the transmission loss.

DETAILED DESCRIPTION

[Problems to be Solved by Present Disclosure]

Non-patent literature 1 describes that Rayleigh scattering due to composition fluctuation increases in proportion to the dopant concentration. Further, when the dopant concentration increases, the following problems may occur. That is, the probability of mixing of impurities that can be contained in the dopant increases, and absorption in the ultraviolet and visible light ranges due to impurities may occur. Further, the probability that the doped elements (dopant) distorts the network structure of the silica glass increases, and glass defects are generated, which may result in an increase in absorption in the ultraviolet wavelength range. In this field, a glass material and an optical fiber having high transmittance in a wide wavelength range are desired.
The object of the present disclosure is to provide glass materials and optical fibers having high transmittance in a wide wavelength range.

[Advantageous Effects of Present Disclosure]

According to the present disclosure, glass materials and optical fibers having high transmittance in a wide wavelength range can be provided.

[Description of Embodiments of the Present Disclosure]

First, embodiments of the present disclosure will be listed and described. (1) A glass material according to an aspect of the present disclosure comprises a silica-based glass and containing a group 14 element. The glass material contains a tetravalent ion $X^{4+}$ of an element X that is at least one of tin and lead and a divalent ion $X^{2+}$ of the element X. This glass material realizes high transmittance in a wide wavelength range.

(2) In the above (1), a concentration ratio of the tetravalent ion $X^{4+}$ to the divalent ion $X^{2+}$ may satisfy $[X^{4+}]/[X^{2+}] \geq 1$. In this case, a higher transmittance is achieved in a wide wavelength range.

(3) In the above (1), a concentration ratio of the tetravalent ion $X^{4+}$ to the divalent ion $X^{2+}$ may satisfy $[X^{4+}]/[X^{2+}] \geq 10$. In this case, a particularly high transmittance in a broad wavelength range is achieved.

(4) In any one of (1) to (3), the glass material may have a relative refractive index difference of 0% or more with respect to a refractive index of silica glass. When this glass material is used for forming the core, it is possible to suppress excessive addition of the downdopant to the cladding.

(5) The glass material according to any one of (1) to (4) may include two or more group 14 elements. In this case, the inclusion of a large amount of a specific group 14 element is suppressed. Thus, the phase separation of the substance into two components with an increase in concentration can be suppressed.

(6) In the glass material according to any one of (1) to (5), silica glass may be present in a mass ratio of 90% or more. In this case, the optical characteristics are prevented from being adversely affected.

(7) An optical fiber according to an aspect of the present disclosure includes a core comprising a silica-based glass and containing a group 14 element and a cladding comprising a silica-based glass and surrounding the core. The core contains a tetravalent ion $X^{4+}$ of an element X that is at least one of tin and lead and a divalent ion $X^{2+}$ of the element X. In this optical fiber, high transmittance is realized in a wide wavelength range, and thus, loss in a transmission wavelength band is reduced.

[Details of Embodiments of Present Disclosure]

Specific examples of the glass material and the optical fiber of the present disclosure will be described below with reference to the drawings. It is noted that, the present invention is not limited to these examples, but is defined by the scope of the claims, and is intended to include all modifications within the meaning and scope equivalent to the scope of the claims. In the description of the drawings, the same elements are denoted by the same reference numerals, and redundant description will be omitted.

(Glass Material)

The glass material according to the embodiment is, for example, an optical glass material. More specifically, the glass material is, for example, a glass material for optical fiber, and is used for forming a core of optical fiber. The glass material comprises silica-based glass which contains silica glass as a main component. The glass material further contains another element other than silicon (Si) and oxygen (O) constituting silica glass.

The glass material contains a group 14 element. Examples of the group 14 element include germanium (Ge), tin (Sn), and lead (Pb). The glass material may contain a plurality of kinds of group 14 elements. The glass material contains a tetravalent ion $X^{4+}$ of the element X that is at least one of tin and lead and a divalent ion $X^{2+}$. The glass material may further contain a group 14 element other than tin and lead.

Tin and lead can change the refractive index difference of the glass material at a lower concentration than germanium. Thus, tin and lead facilitate the production of glass having a high refractive index, and as a result, can be utilized as an optical glass material for a wide range of applications. In particular, when the optical fiber is used, the loss caused by the increase in the concentration of the dopant can be suppressed.

The valence of tin and lead tends to vary. When the valence is different, the absorption wavelength band caused by the doped elements are different. The absorption wavelength band of the tetravalent ion $X^{4+}$ of the element X that is at least one of tin and lead and the absorption wavelength band of the divalent ion $X^{2+}$ of the element X exist in the ultraviolet and visible light ranges. The absorption wavelength band of the tetravalent ion $X^{4+}$ is more likely to peak shifting towards the short-wavelength side, specifically in a direction away from the near infrared side which is the transmission waveband, compared to the absorption wavelength band of the divalent ion $X^{2+}$. Further, the tetravalent ion $X^{4+}$ can suppress strain at the atomic level when the tetravalent ion of silicon $Si^{4+}$ is substituted with the tetravalent ion $X^{4+}$, compared to the divalent ion $X^{2+}$. As a result, the occurrence of glass defects can be suppressed.

The concentration ratio of the tetravalent ion $X^{4+}$ of the element X that is at least one of tin and lead to the divalent ion $X^{2+}$ may satisfy $[X^{4+}]/[X^{2+}] \geq 1$, may satisfy $[X^{4+}]/[X^{2+}] \geq 10$, and may satisfy $[X^{4+}]/[X^{2+}] \geq 100$. That is, in the case of lead, $[Pb^{4+}]/[Pb^{2+}]$ may be 1 or more, 10 or more, or 100 or more. In the case of tin, $[Sn^{4+}]/[Sn^{2+}]$ may be 1 or more, 10 or more, or 100 or more.

The glass material may include two or more kinds of group 14 elements, or may include three or more kinds of group14 elements. When the glass material includes a plurality of kinds of group14 elements, the concentration of each group14 element required to realize a desired refractive index can be reduced. Thus, it is possible to suppress a state in which the compound of the group 14 element and the element present in the glass is phase-separated into two components with an increase in concentration. Further, when the glass material includes two or more kinds of group 14 elements, at least one kind of element may satisfy the above-described concentration ratio.

When such a phase separation state occurs, light absorption and scattering occur at the phase interface, and as a result, the optical characteristics change. These phase states are greatly changed by the cooling rate in the glass manufacturing process and a slight temperature unevenness of, for example, about 10 °C. Thus, the controllability of the optical characteristics is greatly deteriorated. Thus, it is very important to suppress the phase separation in the first place. In the glass material for optical fiber, when other substance phases are generated in the process of fiberization, the hardness in the glass becomes non-uniform, and as a result, the target fiber diameter and refractive index profile cannot be realized. Thus, it is important to suppress the concentration of each group 14 element in order to suppress the decrease in the yield of the optical fiber.

The concentration of the group 14 element contained in the glass material is set according to the refractive index of the glass material to be targeted. The amount of change in the refractive index difference of the glass material with respect to the refractive index of pure silica glass ($SiO_2$, that is, silica glass) is 0.06% per 1% by mass in the case of germanium, 0.14% per 1% by mass in the case of tin, and 0.12% per 1% by mass in the case of lead.

A relative refractive index difference $\Delta$ of the glass material with respect to the refractive index of pure silica glass ($SiO_2$, that is, silica glass) may be 0% or more, 0.2% or more, or 0.3% or more. When such a glass material is used for forming the core, it is possible to suppress excessive addition of the downdopant such as F to the cladding. Thus, increase in transmission loss due to the increase in the concentration of the additive can be suppressed. Relative refractive index difference $\Delta$ may be larger than 0%.

In the case of germanium, when a single element is added, that is, when only one kind of group 14 element is added, the mass ratio may be 50 ppm or more, 30000 ppm or more, or 50000 ppm or more. In the case of tin and lead, the mass ratio may be 50 ppm or more, 14000 ppm or more, or 20000 ppm or more.

The glass material may further contain an alkali metal element, an alkaline earth metal element, a group 13 element, a halogen element, and the like. Examples of the alkali metal element include lithium (Li), sodium (Na), potassium (K), and rubidium (Rb). Examples of the alkaline earth metal element include magnesium (Mg), calcium (Ca), strontium (Sr), and barium (Ba). Examples of the group 13 element include boron (B), aluminum (Al), gallium (Ga), and indium (In). Examples of the halogen element include fluorine (F), chlorine (Cl), bromine (Br), and iodine (I).

In particular, the halogen element easily oxidizes other elements, and thus easily converts the group 14 element into a tetravalent ion. On the other hand, when phase separation of the additive substance occurs due to the addition of multiple elements, the optical characteristics are adversely affected. Thus, the ratio of silica glass as the main component may be 90% or more, 95% or more, or 98% or more in mass ratio.

The evaluation of the valence of lead and tin is performed by using, for example, X-ray photoelectron spectroscopy (XPS). For lead, a peak derived from $Pb^{2+}$ is observed between 137 and 138 eV, and a peak derived from $Pb^{4+}$ is observed between 138 and 139 eV. For tin, a peak derived from $Sn^{2+}$ is observed between 486 and 487 eV, and a peak derived from $Sn^{4+}$ is observed between 487 and 488 eV. These peaks are fitted using Gaussian functions to identify the peaks. The concentration ratio is defined from the area intensity ratio of the obtained fitting functions.

Glass materials are produced using methods such as plasma sintering. In the plasma-sintering process, the addition and the sinter are carried out under nitrogen-and-oxygen ($N_2 + O_2$) atmosphere. The valences of tin and lead to be added can be easily controlled by the atmosphere during sintering. In order to add the element X in the state of the tetravalent ion $X^{4+}$, the partial pressure ratio of the oxygen gas to the non-oxygen gas may be [oxygen]/[non-oxygen] $\geq 3$, [oxygen]/[non-oxygen] $\geq 5$, or [oxygen]/[non-oxygen] $\geq 10$.

(Optical Fiber)

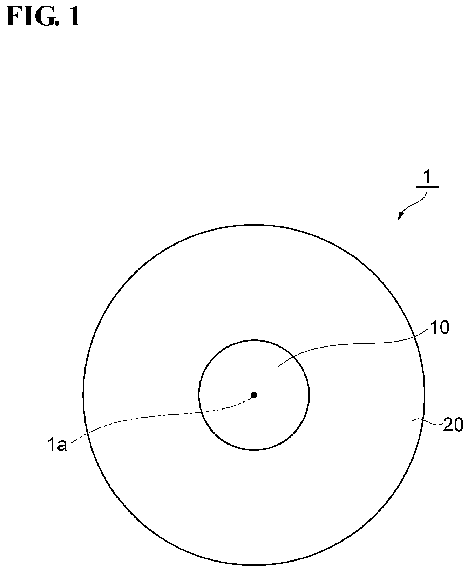

FIG. 1 is a cross-sectional view showing an optical fiber according to an embodiment. An optical fiber 1 according to an embodiment includes a core 10 extending along a central axis 1a and a cladding 20 surrounding core 10. Optical fiber 1 is formed using the glass material according to the embodiment. More specifically, core 10 is formed using the glass material according to the embodiment. Cladding 20 comprises silica-based glass which contains silica glass as a main component.

Table 1 shows the relationship between the concentration ratios and the transmission losses.

[Table 1]

| [ Pb$^{4+}$] /[Pb$^{2+}$] | Transmission Loss [dB/km] | [ Sn$^{4+}$] /[Sn$^{2+}$] | Transmission Loss [dB/km] |
|---|---|---|---|
| 0.02 | 0.16 | 0.01 | 0.161 |
| 0.52 | 0.161 | 0.43 | 0.159 |
| 1 | 0.155 | 0.99 | 0.156 |
| 2.1 | 0.155 | 3.1 | 0.154 |
| 10 | 0.153 | 10 | 0.152 |
| 25 | 0.1525 | 40 | 0.152 |
| 100 | 0.151 | 100 | 0.1508 |
| 185 | 0.15 | 235 | 0.151 |
| 512 | 0.1505 | 604 | 0.1504 |

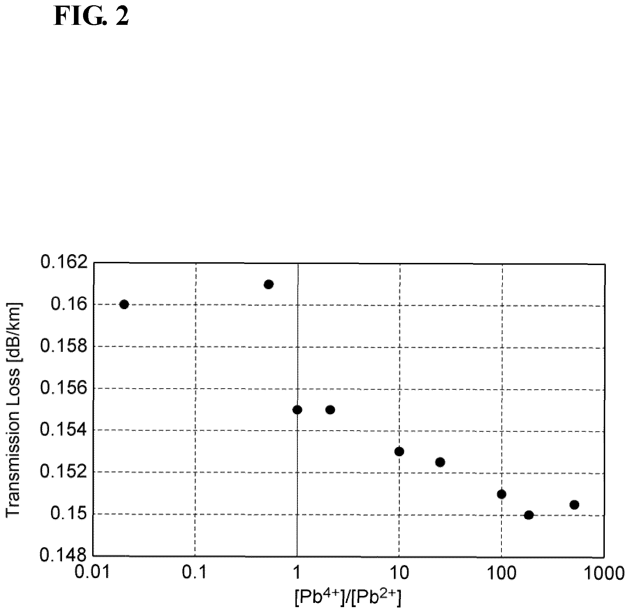

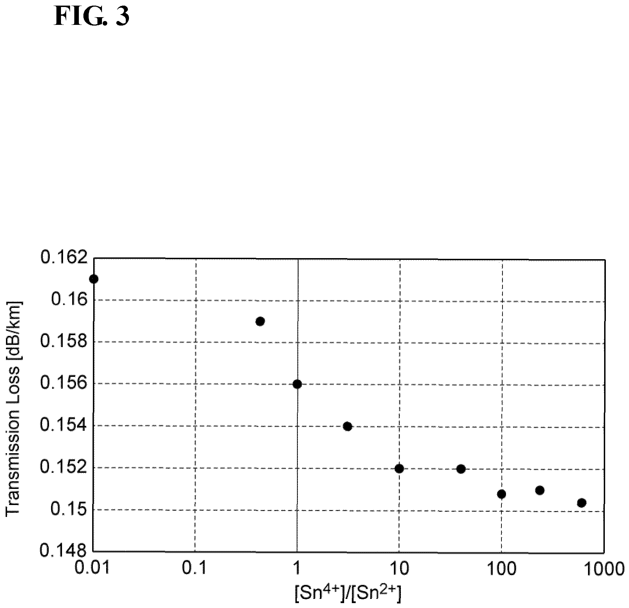

FIG. 2 and FIG. 3 are graphs each illustrating the relationship between the concentration ratio and the transmission loss. In FIG. 2, the case of lead is shown. In FIG. 3, the case of tin is shown. As shown in Table 1, FIG. 2 and FIG. 3, it is understood that the transmission loss tends to decrease as the concentration ratio increases. When $[X^{4+}]/[X^{2+}] \geq 1$, it can be confirmed that the transmission loss is suppressed in both lead and tin.

While the embodiments have been described, the present disclosure is not necessarily limited to the above-described embodiments and modifications, and various changes can be made without departing from the scope of the present disclosure.

REFERENCE SIGNS LIST

1 optical fiber
1a central axis
10 core
20 cladding

**Claims**

1. A glass material comprising a silica-based glass and containing a group 14 element,
   wherein the glass material contains a tetravalent ion $X^{4+}$ of an element X that is at least one of tin and lead and a divalent ion $X^{2+}$ of the element X.

2. The glass material according to claim 1,
   wherein a concentration ratio of the tetravalent ion $X^{4+}$ to the divalent ion $X^{2+}$ satisfies

$$[X^{4+}]/[X^{2+}] \geq 1.$$

3. The glass material according to claim 1 or 2,
   wherein a concentration ratio of the tetravalent ion $X^{4+}$ to the divalent ion $X^{2+}$ satisfies

$$[X^{4+}]/[X^{2+}] \geq 10.$$

4. The glass material according to any one of claims 1 to 3,
   wherein the glass material has a relative refractive index difference of 0% or more with respect to a refractive index of silica glass.

5. The glass material according to any one of claims 1 to 4,
   wherein the group 14 element includes two or more group 14 elements.

6. The glass material according to any one of claims 1 to 5,
   wherein silica glass is present in a mass ratio of 90% or more.

7. The glass material according to any one of claims 1 to 6,
   wherein a concentration ratio of the tetravalent ion $X^{4+}$ to the divalent ion $X^{2+}$ satisfies

$$[X^{4+}]/[X^{2+}] \geq 100.$$

8. The glass material according to any one of claims 1 to 7,
   wherein the glass material has a relative refractive index difference of 0.2% or more with respect to a refractive index of silica glass.

9. The glass material according to any one of claims 1 to 8,
   wherein the glass material has a relative refractive index difference of 0.3% or more with respect to a refractive index of silica glass.

10. The glass material according to any one of claims 1 to 9,
    wherein silica glass is present in a mass ratio of 95% or more.

11. The glass material according to any one of claims 1 to 10,
    wherein silica glass is present in a mass ratio of 98% or more.

12. An optical fiber comprising:

    a core comprising a silica-based glass and containing one or more elements selected from the element group consisting of germanium, tin, and lead; and
    a cladding comprising a silica-based glass and surrounding the core,
    wherein the core contains a tetravalent ion $X^{4+}$ of an element X that is at least one of tin and lead and a divalent ion $X^{2+}$ of the element X.

FIG. 1

# FIG. 2

# FIG. 3

## INTERNATIONAL SEARCH REPORT

| International application No. |
| --- |
| **PCT/JP2023/018319** |

**A.     CLASSIFICATION OF SUBJECT MATTER**

*C03C 13/04*(2006.01)i; *C03C 3/06*(2006.01)i; *G02B 6/02*(2006.01)i
FI:    C03C13/04; C03C3/06; G02B6/02 376A

According to International Patent Classification (IPC) or to both national classification and IPC

**B.     FIELDS SEARCHED**

Minimum documentation searched (classification system followed by classification symbols)

C03C1/00-C03C14/00; G02B6/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

**C.     DOCUMENTS CONSIDERED TO BE RELEVANT**

| Category* | Citation of document, with indication, where appropriate, of the relevant passages | Relevant to claim No. |
| --- | --- | --- |
| X | JP 2009-274947 A (ASAHI GLASS CO LTD) 26 November 2009 (2009-11-26) paragraphs [0048], [0088]-[0121] | 1-2, 4, 6, 8-9 |
| X | JP 56-121002 A (NIPPON TELEGRAPH & TELEPHONE) 22 September 1981 (1981-09-22) page 2, lower right column, line 20 to p. 3, upper right column, table 1 | 1, 4, 6, 8-9, 12 |
| X | RYBALTOVSKII, A. O et al. Spectroscopic Features of Silica Glasses Doped with Tin. Glass Physics and Chemistry. 2002, vol. 28, no. 6, pp. 379-388, in particular, experimental technique | 1, 4, 6, 8-11 |
| X | PATRA, Amitava et al. Effects of Pb2+-doping on alkoxide-derived silica sols and gels. Journal of Non-Crystalline Solids. 1992, vol. 139, no. 2, pp. 165-171, in particular, 2. Experimental 3. Results | 1, 4, 6, 8-11 |
| A | JP 2007-238425 A (ASAHI GLASS CO LTD) 20 September 2007 (2007-09-20) | 1-12 |

☐ Further documents are listed in the continuation of Box C.      ☑ See patent family annex.

| | |
| --- | --- |
| *        Special categories of cited documents: <br> "A"    document defining the general state of the art which is not considered to be of particular relevance <br> "E"    earlier application or patent but published on or after the international filing date <br> "L"    document which may throw doubts on priority claim(s) or which is cited to establish the publication date of another citation or other special reason (as specified) <br> "O"    document referring to an oral disclosure, use, exhibition or other means <br> "P"    document published prior to the international filing date but later than the priority date claimed | "T"    later document published after the international filing date or priority date and not in conflict with the application but cited to understand the principle or theory underlying the invention <br> "X"    document of particular relevance; the claimed invention cannot be considered novel or cannot be considered to involve an inventive step when the document is taken alone <br> "Y"    document of particular relevance; the claimed invention cannot be considered to involve an inventive step when the document is combined with one or more other such documents, such combination being obvious to a person skilled in the art <br> "&"    document member of the same patent family |

| Date of the actual completion of the international search | Date of mailing of the international search report |
| --- | --- |
| **27 July 2023** | **08 August 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/JP2023/018319**</td></tr>
</table>

| Patent document cited in search report | Publication date (day/month/year) | Patent family member(s) | Publication date (day/month/year) |
|---|---|---|---|
| JP 2009-274947 A | 26 November 2009 | US 2011/0028299 A1<br>paragraphs [0060], [0113]-[0146]<br>WO 2009/128560 A1 | |
| JP 56-121002 A | 22 September 1981 | US 4975102 A<br>column 2, line 39 to column 3, line 25, table 1<br>GB 2065633 A<br>DE 3040188 A1 | |
| JP 2007-238425 A | 20 September 2007 | US 2008/0103038 A1<br><br>WO 2007/032533 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022094170 A

**Non-patent literature cited in the description**

- **MOTOHIRO NAKAHARA**. Reduction of Loss of Optical Fiber. *Oubutsu*, 1981, vol. 50 (10), 1006-1020